Europäisches Patentamt

(19) European Patent Office

Office européen des brevets

(11) Publication number: **0 043 162**

A1

## EUROPEAN PATENT APPLICATION

(21) Application number: **81200704.5**

(22) Date of filing: **23.06.81**

(51) Int. Cl.³: **F 04 D 13/08**
**F 04 D 29/40, H 02 K 5/136**

(30) Priority: **01.07.80 SE 8004846**

(43) Date of publication of application:
**06.01.82 Bulletin 82/1**

(84) Designated Contracting States:
**DE GB IT NL**

(71) Applicant: **IMO AB Jönköpings Mekaniska Werkstad**
**Kyrkogatan 9**
**S-551 02 Jönköping(SE)**

(72) Inventor: **Ekman, Karl Gunnar**
**Linnegatan 29**
**S-552 44 Jönköping(SE)**

(74) Representative: **Ahlström, Erik**
**AHLPATENT AB Hemstigen 21**
**S-55266 Jönköping(SE)**

(54) **Improvements in electrically powered, submersible centrifugal pumps.**

(57) A submersible pump which may be provided in a cargo tank of an oil tanker or the like, comprising an electric driving motor (1) which is surrounded by a cooling jacket (9). To isolate the motor (1) from the cargo oil or liquid, the motor (1) including its cooling jacket (9) is enclosed in a coffer-dam (18) which is suitably filled with water and through which extends at least a substantial portion of an electric current supply cable (20) for the motor.

EP 0 043 162 A1

# IMPROVEMENTS IN ELECTRICALLY POWERED, SUBMERSIBLE CENTRIFUGAL PUMPS

## Background of the Invention

This invention relates to improvements in submersible centrifugal pumps driven by an electric motor.

Generally, electrically powered pumps are preferred whenever possible, since electric power gives a considerably better efficiency than other kinds of driving.

## Summary of the Invention

A general object of the invention is to provide an arrangement of the above kind in which the electric driving motor of the pump is positively and effectively isolated from the liquid to be pumped and in which the pump, which is submersible, is located.

A specific object of the invention is to make possible the pumping off of oil cargo and the like on board ships by means of an electrically powered centrifugal pump which is submerged in the cargo oil.

According to the invention these objects are attained thanks to the fact that substantially the entire electric motor which drives the pump is enclosed in or surrounded by a coffer-dam which is preferably filled with water. This arrangement makes possible in particular the utilization of electrically powered, submersible pumps for the evacuation of cargo oil on ships, which gives rise to an improved economy.

## Brief Description of the Drawings

Further features and advantages of the pump arrangement according to the invention will become apparent from the following detailed description and the annexed drawing which diagrammatically and as a non-limiting example illustrates a preferred embodiment of the pump arrangement according to the invention, substantially in a vertical longitudinal section.

## Description of the preferred Embodiment

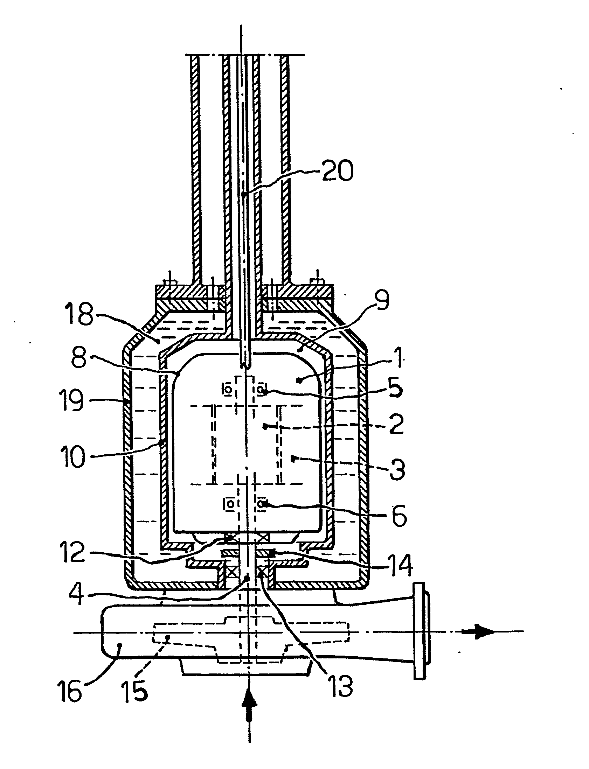

In the drawing 1 generally designates an electric motor having a rotor 2, a stator 3, a shaft 4, and bearings 5 and 6. The motor is enclosed in a housing 8 which forms an inner wall of a cooling jacket 9 which has an outer jacket wall 10. Seals or gaskets 12 and 13 are provided between the motor shaft 4 and the inner and outer jacket walls 8 and 10, respectively. On that portion of the shaft 4 which is located in the cooling jacket 9 a small pump wheel 14 may be provided for circulating the cooling fluid which preferably is water.

On the motor shaft 4 which also constitutes a pump shaft there is provided a pump wheel 15 which is located in a pump casing 16 in a conventional manner. The pump is submersible and preferably of the centrifugal type and may be considered as being disposed in a cargo tank of an oil tanker or the like.

According to the invention the motor 1 as well as the cooling jacket 9 are enclosed in a coffer-dam which surrounds them and is preferably filled with water or another liquid which is not identical with the liquid to be pumped. The coffer-dam has an outer jacket wall 19, and its inner jacket wall is constituted by the outer wall of the cooling jacket 9. Beneath the cooling jacket 9 the coffer-dam 18 preferably extends radially inwards to a seal which surrounds the shaft 4 and may possibly form part of the seal 13 of the cooling jacket. Alternatively the lower portion of the coffer-dam may be defined by an end wall, which e.g. may have the shape of a circular ring, or by part of the wall 16 of the pump casing. Above the motor housing 8 the coffer-dam preferably has a substantially smaller circumference than it has just opposite the motor 1 and suitably extends as far as up to the deck. In this embodiment the liquid pressure in at least the lower portion of the coffer-dam 18 is higher than it is in the cooling jacket 9. The whole coffer-dam, or at least that portion thereof which is located above the motor housing 8 surrounds an electric cable 20 which suitably extends, preferably centrally, through the whole coffer-dam.

The embodiment described above and shown in the drawing is, of course, to be regarded merely as a non-limiting example and may as to its details be modified in several ways within the scope of the following claims. Thus, for instance, the coffer-dam 18 may have another shape and essentially greater dimensions than as shown.

4

## CLAIMS

1) Improvements in electrically powered, submersible centrifugal pumps whose electric motor (1) is enclosed in a
cooling jacket (9) which surrounds the motor and has an
inner jacket wall (8) and a tight outer jacket wall (10),
c h a r a c t e r i z e d  in that the electric motor (1)
and its cooling jacket (9) are both surrounded by a common,
preferably water-filled coffer-dam (18) which is completely isolated from the cooling jacket (9) by the tight,
outer jacket wall (10).

2) Improvements according to claim 1, c h a r a c t e r i -
z e d  in that the outer jacket wall (10) of the cooling
jacket (9) also constitutes the inner wall of the coffer-
dam (18).

3) Improvements according to claim 2, c h a r a c t e r i -
z e d  in that the pump (15, 16) and the motor (1) are
located in a cargo space of an oil tanker or another ship
for liquid cargo, and in that the coffer-dam (18) in the
vertical direction extends substantially as far as right
up to the deck.

4) Improvements according to claim 3, c h a r a c t e r i -
z e d  in that the liquid pressure in at least the lower
portion of the coffer-dam (18) is higher than the liquid
pressure in the cooling jacket (9) and/or the cargo space.

5) Improvements according to claim 1, c h a r a c t e r i -
z e d  in that the coffer-dam (18) surrounds an electric
cable (20) which belongs to the motor (1) and which preferably extends substantially centrally through the coffer-
dam in the whole extension of the latter.

5

6) Improvements according to claim 5, c h a r a c t e r i - z e d  in that the coffer-dam (18) has a considerably smaller circumference above the electric motor than just opposite the latter.

7) Improvements according to anyone .of the claims 1 - 6, c h a r a c t e r i z e d  in that the coffer-dam (18) has an end which is located adjacent the pump and extends radially inwards to a seal (13) or the like which is provided between the electric motor (1) and the pump (15, 16) and which surrounds a shaft (4) common to the electric motor and the pump.

0043162

European Patent
Office

**EUROPEAN SEARCH REPORT**

Application number

EP 81 20 0704

## DOCUMENTS CONSIDERED TO BE RELEVANT

| Category | Citation of document with indication, where appropriate, of relevant passages | Relevant to claim |
|---|---|---|
| | GB - A - 513 195 (AVIGDOR)<br>* Whole document * | 1,3,4, 5,7 |
| | DE - C - 709 287 (WARSCHAU)<br>* Whole document * | 1,2,5, 6,7 |
| | DE - A - 2 243 027 (KLEINEN)<br>* Whole document * | 1,3,4, 5,6,7 |
| A | DE - A - 1 488 461 (BLUM)<br>* Pages 4,5; figure *<br>& GB - A - 1 096 478 | 1 |
| A | US - A - 2 545 422 (BLOM)<br>* Column 1, lines 1-52; column 3, line 72 - column 5, line 2; figure 2 * | 1 |

**CLASSIFICATION OF THE APPLICATION (Int Cl.3)**

F 04 D 13/08
F 04 D 29/40
H 02 K 5/136

**TECHNICAL FIELDS SEARCHED (Int. Cl.3)**

F 04 D
H 02 K

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family
corresponding document

The present search report has been drawn up for all claims

| Place of search | Date of completion of the search | Examiner |
|---|---|---|
| The Hague | 08-10-1981 | WENZEL |

EPO Form 1503 1 06.78